# EUROPEAN PATENT APPLICATION

(11) **EP 2 110 927 A2**
(43) Date of publication of application: **21.10.2009**
(21) Application number: 09157537.3
(22) Date of filing: 07.04.2009
(51) Int. Cl.: H02K 1/32, H02K 15/02

(54) **Method Of Making And Device For Cooling Rotor Motor Cores**

(30) Priority: 17.04.2008 US 104667
(71) Applicant: General Electric Company, Schenectady, NY 12345 (US)
(72) Inventor: Sirois, Robert David, Fort Wayne, IN 46804 (US)
(74) Representative: Illingworth-Law, William Illingworth

(57) **Abstract**

A vent plate for a rotor of a motor core includes a hub (204), a plurality of spokes extending from the hub and a plurality of coffin portions (208) each having a coffin bore extending therethrough and at least one of which is connected with a spoke. The coffin portions may each be radially spaced from, and circumferentially spaced about the hub and wherein each coffin portion comprises an outer radial end, and a connecting ring which extends about the periphery of the coffin portions. The connecting ring may engage each outer radial end. In another embodiment of the present invention, a method of making a rotor for an electric motor is also presented.

## Description

### Background of the Invention

### Field of the Invention

The subject matter described herein relates generally to motors and, more particularly, to a method of making and a device for cooling rotor motor cores.

### Related Art

Presently, a known method of cooling a motor includes ventilating a rotor core using spacers. In general, a core may comprise laminations and the spacers (also known as coffins) may be mounted between each lamination. The spacers may be configured as I-beams, blocks or packets where the I-beams and the blocks simply function to space the laminations and allow for the flow of cooling air between the laminations. Spacer packets may include a central bore that communicates with an aperture of each lamination that it is disposed between and thus may provide for a flow of cooling air transversely through the laminations.

Spacer packets are generally fixed by numerous secondary fabricating operations such as assembly, stamping, welding, and machining.

One disadvantage to the above methods is that each requires fixing of the spacers between laminations thereby substantially increasing fabrication costs.

Accordingly, to date, no suitable method of making or device for cooling a motor is available.

### Brief Description

In one embodiment of the present invention, a method of making a rotor for an electric motor, comprises providing at least one blank and cutting the at least one blank to form at least one vent plate. The vent plate comprises a hub, a plurality of spokes extending from the hub and a plurality of coffin portions each having a coffin bore extending therethrough and at least one of which is connected with a spoke. The coffin portions may each be radially spaced from, and circumferentially spaced about, the hub and wherein each coffin portion comprises an outer radial end and a connecting ring which extends about the periphery of the coffin portions. The connecting ring may engage each outer radial end. The method may further comprise providing a plurality of rotor laminations, interleaving the at least one vent plate between multiple laminations to form a rotor assembly stack, injecting a metallic binder substance into the rotor assembly stack to bind the spacer and laminations together and each coffin portion of the at least one vent plate together, and removing a portion of an outer diameter of the rotor assembly stack, whereby the outer radial end of each coffin portion is removed whereby each coffin bore communicates with ambient air.

In another embodiment of the present invention, a vent plate for a rotor of a motor core comprises a hub, a plurality of spokes extending from the hub, and a plurality of coffin portions each having a coffin bore extending therethrough. At least one of the coffin portions is connected with a spoke. The coffin portions may each be radially spaced from, and circumferentially spaced about the hub. Each coffin portion comprises an outer radial end, and a connecting ring which extends about the periphery of the coffin portions wherein the connecting ring engages each outer radial end.

Other features and advantages of the disclosure will become apparent by reference to the following description taken in connection with the accompanying drawings.

### BRIEF DESCRIPTION OF THE DRAWINGS

Reference is now made briefly to the accompanying drawings, in which:
Figure 1 is a diagram showing a rotor lamination of a rotor core.
Figure 2 is a diagram of a vent plate to which embodiments of the present invention relate.
Figure 3 is a flow chart describing a stepwise method in accordance with a further embodiment of the present invention
Figure 4 is a perspective view of a rotor core comprising vent plates to which embodiments of the present invention relate.
Like reference characters designate identical or corresponding components and units throughout the several views, which are not to scale unless otherwise indicated.

### DETAILED DESCRIPTION

One embodiment of the present invention involves a method for making a rotor for an electric motor comprising the use of a vent plate. One particular advantage afforded by this invention is the ability to provide airflow for cooling purposes through a rotor lamination while eliminating the need for numerous secondary operations such as fabricating, stamping or machining separate spacer blocks which then must be fastened to rotor laminations by welding or other methods.

Specific configurations and arrangements of the claimed invention, discussed below with reference to the accompanying drawings, are for illustrative purposes only. Other configurations and arrangements that are within the purview of a skilled artisan can be made, used, or sold without departing from the spirit and scope of the appended claims. For example, while some embodiments of the invention are herein described with reference to rotor cores for electric motors, a skilled artisan will recognize that embodiments of the invention can be implemented in any setting in which cooling a motor is advantageous.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

Although specific features of various embodiments of the invention may be shown in some drawings and not in others, this is for convenience only. In accordance with the principles of the invention, the feature(s) of one drawing may be combined with any or all of the features in any of the other drawings. The words "including", "comprising", "having", and "with" as used herein are to be interpreted broadly and comprehensively and are not limited to any physical interconnection. Moreover, any embodiments disclosed herein are not to be interpreted as the only possible embodiments. Rather, modifications and other embodiments are intended to be included within the scope of the appended claims.

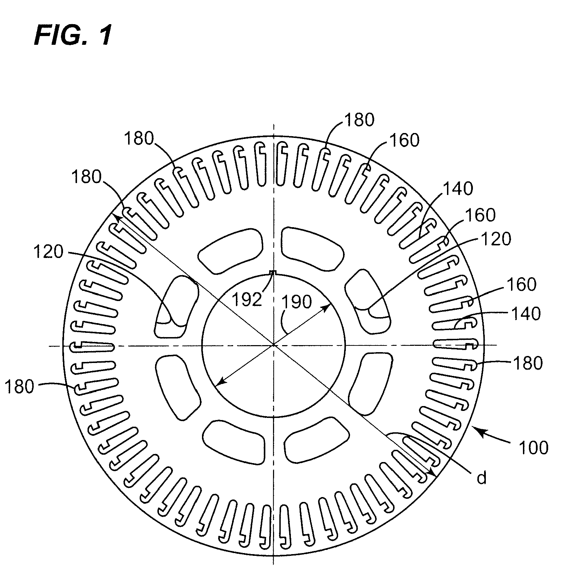

Referring now to Figure 1, an aspect of the present invention may comprise a rotor lamination, which is shown generally at 100. The rotor lamination 100 may be one of a plurality of rotor laminations laminated together with vent plates to form a rotor core. Each rotor lamination 100 may comprise a plurality of apertures 140 which generally contain a conductive material such as copper or aluminum (not shown). As shown in this particular illustrated example, each wiring aperture comprises a tab 160 and a shaped end portion 180 that are well known to be configurable in various geometries to achieve various electromagnetic properties of the motor. Furthermore, each rotor lamination 100, may further comprise a central aperture 190 that includes a key way 192 that is configured, e.g., for mounting to a motor shaft (not shown). A first plurality of cooling apertures 120 are provided for cooling purposes and are spaced circumferentially and radially from the aperture 190. A fan (not shown) may be employed to create a laminar flow of cooling fluid that passes through the apertures 120 in a generally axial direction to a rotational axis (x).

Also, it will be appreciated that each of the rotor laminations 100 may each comprise a generally disc-like outer configuration and as such each has a relatively small width (w) relative to an outer diameter (d) thereof. Further, each of the rotor laminations 100 may comprise a ferromagnetic material that may be stamped and/or cut using various cutting mediums such as a laser beam or high- pressure water cutting.

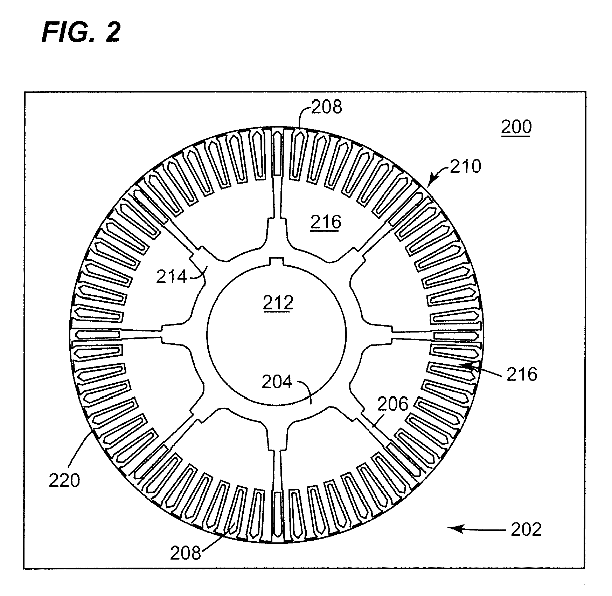

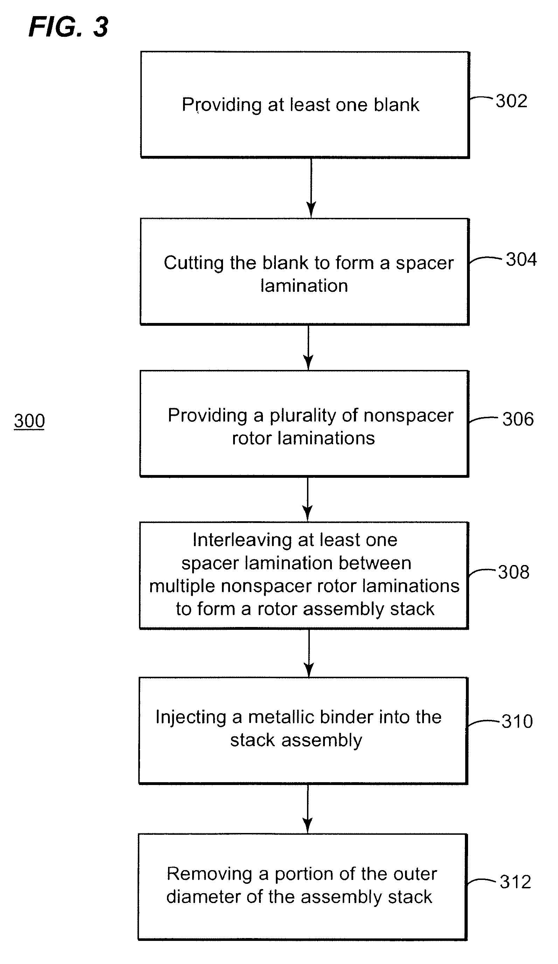

Referring now to Figure 2, a vent plate in accordance with one embodiment of the present invention is shown generally at 200. The blank 202 may comprise a sheet metal such as carbon steel, galvanized steel, stainless steel, aluminum, and the like. The vent plate 200 may be cut from blank using traditional machining, lasers or water-jet cutting techniques, which will be discussed in greater detail with reference to Figure 3.

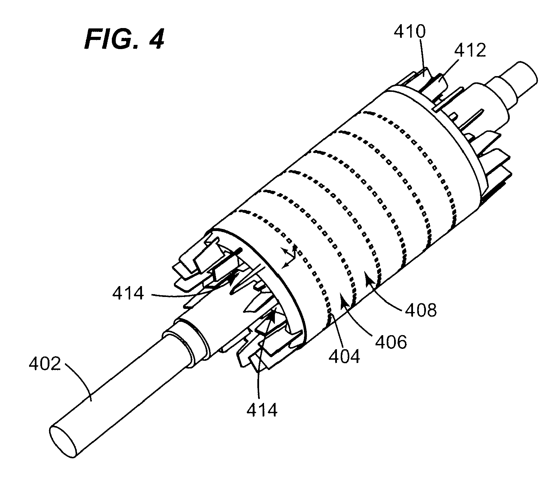

The vent plate 200 may comprise a hub 204, a plurality of spokes 206, a plurality of coffins 208 and a connecting ring 210. As shown, the hub 204 is generally circular in shape, having a centrally located mounting bore 212 configured to mount a rotor shaft (as shown in Figure 4). The hub further comprises a plurality of appendages 214 which are located about the periphery of the hub. The appendages 214 may be configured for the attachment of a plurality of spokes 206 which may be attached to and extend from the hub 204.

The appendage of the hub 214 and the inner portion of the spokes 206 may be attached at the hubs outer periphery. While, as illustrated, the design comprises seven spokes, it is to be appreciated that number and size of the spokes may vary depending upon engine design.

With further reference to Figure 2, the vent plate may comprise a plurality of coffins (also known as spacer packets) 208 that are radially spaced from and circumferentially spaced about the hub 204. The coffins 208 may form a noncontiguous ring about the hub 204, and may be attached at an inner end at least any two spokes 206 which may be configured to hold the spacer portion in place. An outer radial end of the coffins 208 may be further attached at a connecting ring 210 which extends about the periphery of the coffin portion and wherein the connecting ring engages each outer radial end of the coffins. The connecting ring may stabilize those coffins not attached at a spoke.

The outer periphery of the hub 204 may combine with the inner portion of the connecting ring and the side portions of two spokes to form venting apertures 214 about the periphery of the hub. The venting aperture 214 may align itself with cooling aperture 120 of Figure 1 to define a cooling vent that may be configured to allow airflow in a direction axial to the axial bore.

The coffin portion 220, as shown in Figure 2, comprises a plurality of coffin shaped spacer packets having an outer radial end that engages the connecting ring 210, and an inner portion that may attach to a spoke 206. Each coffin may be configured parallel to each other while spaced to define cooling apertures 216 between them. Furthermore, there may exist a coffin bore 218 extending therethrough. While the aperture 216 may be configured to allow cooling fluid to pass axially and radially therethrough, coffin bore 218 may be configured to allow for the injection of a metallic binder substance during casting and may become filled with metallic binder during casting, which will be discussed in more detail with relation to Figures 3 and 4.

Referring now to Figure 3, a method for making a rotor for an electric motor is provided generally at 300. The flowchart is shown to better help illustrate this exemplary method. While the flowchart shows an exemplary step-by-step method, it is to be appreciated that a skilled artisan may rearrange or reorder the steps while maintaining like results.

In one embodiment of the present invention the method comprises providing at least one blank 302. In this embodiment, the blank may generally be a sheet metal made of carbon steel, galvanized steel, stainless steel, aluminum, and the like. It is to be further appreciated that the diameter of the blank may vary depending upon rotor assembly and motor dimensions. For example, the thickness of the blank may be approximately .125 inches, although, it will be understood that multiple blanks may be joined together in the practice of the present invention.

Cutting the at least one blank to form at least one vent plate 304 may best be accomplished by laser cutting or water-jet cutting. While traditional machining methods may also be used, advantages to lasering or water-cutting the blanks include less chance of contamination, higher degree of precision (as there is no wear on lasers), and a reduced chance of warping to the blank. If water-cutting is the preferred method, such abrasives as garnet and aluminum oxide may be added as a cutting conduit.

In this exemplary embodiment, the at least one vent plate may be functionally comparable to the vent plate shown in Figure 2, which comprises a hub, a plurality of spokes extending from the hub, a plurality of coffin portions each having a coffin bore extending therethrough and at least one of which is connected with a spoke, the coffin portions each being radially spaced from, and circumferentially spaced about, the hub and wherein each coffin portion comprises an outer radial end, and a connecting ring which extends about the periphery of the coffin portions and wherein the connecting ring engages each outer radial end. Again, the thickness of the vent plate will be dependent upon the gauge of the blank, which is further dependent upon the dimension of the rotor assembly.

Providing a plurality of rotor laminations 306 may comprise providing a rotor laminations such as one shown in Figure 1 which may comprise a plurality of apertures which generally contain a conductive material such as copper or aluminum, a tab portion, and a shaped end portion that are well known to be configurable in various geometries to achieve various electromagnetic properties of the motor. Furthermore, each rotor lamination may further comprise a central aperture that includes a key way that is configured, e.g., for mounting to a motor shaft. A first plurality of cooling apertures may be provided for cooling purposes and are spaced circumferentially and radially from the aperture. A fan may be employed to create a laminar flow of cooling fluid that passes through the apertures in a generally axial direction to a rotational axis (x).

Interleaving the at least one vent plate between multiple spacer laminations to form a rotor assembly stack 308 may comprise alternately stacking vent plates and rotor laminations wherein the rotor laminations comprise a plurality of slots that may align with each of the coffin bores of the vent plates and wherein the cooling apertures of the rotor laminations may align themselves with the venting apertures of the vent plate to define an axial and radial cooling duct network configured to allow a cooling fluid, e.g., ambient air, to flow through the rotor assembly. In one exemplary embodiment, a stack of six laminations and rotor laminations may be sufficient to define a rotor assembly with an adequate cooling duct network.

Injecting a metallic binder substance into the rotor assembly stack to bind the vent plates and rotor laminations together and to bind each coffin portion of the at least one vent plate 310 may comprise die casting, which is known in the art. In this step of the exemplary method, forcing a metallic substance, e.g., aluminum or copper alloy, under high pressure into the cavity of the rotor assembly stack to fix, amongst other parts, the coffin portion of the vent plate. In an alternate embodiment, this step 310 may comprise spin casting, wherein a rubber mold is spun along the central axis of the rotor assembly and the metallic binder substance is poured through the top center of the mold and is further spun until the metallic binder sets. This step may further insure that cooling apertures are not hindered by the metallic binder. The final hardened cast, which will be discussed later with reference to Figure 4, may be used as a component in the completed rotor core.

Removing a portion of an outer diameter of the rotor assembly stack, whereby the outer radial end of each coffin portion is removed and whereby each coffin bore communicates with ambient air 312 may be accomplished by a final turning step. In this exemplary embodiment, the turning step may comprise the use of a metalworking lathe to remove the connecting ring portion at the outer circumference of the vent plate. In an optional embodiment of the present invention, an outside diametrical cylindrical grinding method may be used. In turn, the existing apertures may define radial and axial cooling duct networks which may communicate with the ambient air to cool the completed rotor core during use.

With reference now to Figure 4, a completed rotor core after die cast and final turning is shown generally at 400 and comprises a rotor shaft 402, exposed cooling ducts 404, vent plates 406, laminations 408 and end caps 410 with cooling fins 412 and cooling slots 414. The exposed cooling ducts 404 communicate with the apertures 218 (Figure 2) that, in turn, communicate with the cooling slots 414. In this way, a cooling path through the rotor core 400 is provided and during rotation of the rotor core cooling air is conducted therethrough. Advantageously, this exemplary rotor core 400 may be for use with an electric motor, and may be manufactured according to the embodiments discussed above which obviate the need for numerous secondary operations such as assembly, stamping and welding spacer or block components.

Although specific features of various embodiments of the invention may be shown in some drawings and not in others, this is for convenience only. In accordance with the principles of the invention, the feature(s) of one drawing may be combined with any or all of the features in any of the other drawings. The words "including", "comprising", "having", and "with" as used herein are to be interpreted broadly and comprehensively and are not limited to any physical interconnection. Moreover, any embodiments disclosed herein are not to be interpreted as the only possible embodiments. Rather, modifications and other embodiments are intended to be included within the scope of the appended claims.

## Claims

1. A method of making a rotor for an electric motor, comprising:
providing at least one blank (202);
configuring the at least one blank (202) to form at least one vent plate (200), the vent plate (200) comprising:
a hub (204):
a plurality of spokes (206) extending from the hub (204);
a plurality of coffin portions (208) each having a coffin bore extending therethrough and at least one of which is connected with a spoke, the coffin portions (208) each being radially spaced from, and circumferentially spaced about, the hub (204) and wherein each coffin portion (208) comprises an outer radial end; and
a connecting ring (210) which extends about the periphery of the coffin portions (208) and wherein the connecting ring (210) engages each outer radial end; providing a plurality of rotor laminations (306); interleaving the at least one vent plate (200) between multiple laminations (306) to form a rotor assembly stack (308); injecting a metallic binder substance into the rotor assembly stack (308) to bind the spacer and laminations (306) together and each coffin portion (208) of the at least one vent plate (200) together; and removing a portion of an outer diameter of the rotor assembly stack (308), whereby the outer radial end of each coffin portion (208) is removed whereby each coffin bore communicates with ambient air.

2. The method of claim 1, wherein configuring the blank (202) to provide a vent plate step comprises using a laser, water jet, or machining the blank (202).

3. The method of claim 1 or claim 2, wherein the hub (204) of the vent plate (200) further comprises a mounting bore (212) configured to mount to a rotor shaft.

4. The method of claim 1, wherein:
the at least one vent plate (200) comprises a plurality of vent plates;
each lamination (306) comprises a plurality of slots; and
interleaving at least one vent plate (200) between multiple laminations (306) comprises aligning each of the coffin bores of the vent plates (200) with each of the slots of the laminations (306) to define an axial and radial cooling duct network.

5. The method of any one of the preceding claims, wherein the injecting a metallic binder comprises injecting molten metal into the rotor assembly stack (308) to fix the coffin portions (208) of the vent plate (200).

6. The method of the previous claim, wherein the molten metal comprises aluminum or copper.

7. The method of any one of the preceding claims, wherein removing a portion of an outer diameter of the rotor assembly stack (308) comprises using a lathe or outer diameter grinding to cut a portion of a circumference of the at least one vent plate (200).

8. A vent plate for a rotor of a motor core comprising:
a hub (204):
a plurality of spokes extending from the hub (204); and
a plurality of coffin portions (208) each having a coffin bore extending therethrough and at least one of which is connected with a spoke, the coffin portions (208) each being radially spaced from, and circumferentially spaced about the hub (204) and wherein each coffin portion (208) comprises an outer radial end.

9. The apparatus of claim 8, further comprising a connecting ring (210) which extends about the periphery of the coffin portions (208) wherein the connecting ring (210) engages each outer radial end.

10. The apparatus of claim 8 or claim 9, wherein the hub (204) further comprises a mounting bore configured to mount to a rotor shaft.

11. The apparatus of any one of claims 8 to 10, wherein an outer circumference of the hub (204) is connected to the spokes (206) at at least two locations thereof.

12. The apparatus of any one of claims 8 to 11, wherein the spokes (206) are connected to an inner portion of each coffin portion (208) at at least two locations thereof.

13. The apparatus of claim 9, further comprising at least one cooling aperture disposed adjacent to an inner portion of the coffin portion, an outer circumference of the hub, and each nonconnecting side of a spoke.
